# FASCICULE DE BREVET EUROPEEN

(11) **EP 2 572 446 B1**
(45) Date de publication et mention de la délivrance du brevet: **23.04.2014**
(21) Numéro de dépôt: 11717654.5
(22) Date de dépôt: 05.05.2011
(51) Int. Cl.: H02P 1/46, H02P 21/00, H02K 15/00

(54) **PROCÉDÉ DE RÉGLAGE AUTOMATIQUE D'UN RÉSOLVEUR D'UNE MACHINE ÉLECTRIQUE**
VERFAHREN ZUR AUTOMATISCHEN REGELUNG DES RESOLVERS EINER ELEKTRISCHEN MASCHINE
METHOD OF AUTOMATIC REGULATION OF AN ELECTRICAL MACHINE'S RESOLVER

(30) Priorité: 21.05.2010 FR 1053960
(43) Date de publication de la demande: 27.03.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: SAVIO, Cédric, F-63040 Clermont-Ferrand Cedex 9 (FR); LINDA, Jean-Louis, F-63040 Clermont-Ferrand Cedex 9 (FR); VEDY, Bertrand, F-63040 Clermont-Ferrand Cedex 9 (FR)
(74) Mandataire: Roussy, Delphine
(86) Numéro de dépôt international: PCT/EP2011/057227
(87) Numéro de publication internationale: WO 2011/144456

(56) Documents cités:
- GB-A- 2 438 411
- US-A1- 2006 125 439
- US-B1- 6 646 571

## Description

### DOMAINE DE L'INVENTION

La présente invention est relative aux machines électriques tournantes. La présente invention vise plus particulièrement les machines électriques tournantes pourvues d'un résolveur (ou resolver), ou de tout autre capteur permettant de mesurer une position angulaire absolue, et la présente invention se rapporte au réglage initial de ce capteur, par exemple un résolveur.

### ETAT DE LA TECHNIQUE

Lorsque l'arbre d'une machine électrique est équipé d'un résolveur, il entraîne le rotor du résolveur qui produit à la sortie des enroulements de son stator un ensemble de signaux électriques alternatifs dont les caractéristiques d'amplitude relative reflètent fidèlement et instantanément la position angulaire du rotor de la machine. Dans une machine électrique auto pilotée, ce signal est utilisé pour asservir le courant dans les enroulements du stator au maintien d'un écart angulaire optimum (typiquement en quadrature) entre le champ magnétique tournant dans le stator et le champ magnétique engendré entre les pôles du rotor.

Comme exemple d'une telle machine électrique tournante, on peut citer la demande de brevet WO 2010/026159. Ladite machine électrique tournante comprend un stator comprenant un circuit magnétique statorique qui constitue la partie active du stator. Ce circuit magnétique est parcouru par des encoches qui débouchent dans chacune de ses faces terminales. Les encoches sont remplies par des conducteurs qui forment des enroulements dans le circuit magnétique. Au sortir des encoches dans chaque face extrémité axiale du circuit magnétique, les conducteurs sont repliés en formant des enroulements pour passer d'une encoche à la suivante. Les raccordements des enroulements entre elles sont organisés pour former des bobines d'induction. Les extrémités des conducteurs d'enroulement qui sont destinées à se raccorder électriquement avec un connecteur ou un boîtier de raccordement approprié. Les références ci-dessous sont celles utilisées dans la demande de brevet WO 2010/026159 précitée. Les références revoyant aux dessins reprises ci-après sont celles utilisées dans la demande de brevet précitée. Cette machine électrique comporte un résolveur (160) monté à une extrémité axiale de la machine. Le résolveur (160) comprend un stator de résolveur (164) fixé et centré axialement dans un logement à l'intérieur de la carcasse et un rotor de résolveur (162) monté sur l'arbre (31) du rotor de la machine, en regard du stator résolveur. Le stator de résolveur (164) est bloqué dans une position fixe axialement et angulairement dans ledit logement. Le dispositif de montage comporte un palier de réglage en rotation de la position angulaire du rotor résolveur (162) sur l'arbre du rotor machine (31) et une bague de friction (202) permettant de maintenir le rotor de résolveur (162) immobile sur l'arbre (31) du rotor de la machine dans une position angulaire choisie.

L'état de la technique connaît aussi, par le document US 2006/125439, une machine électrique équipée d'un résolveur capable de donner une mesure de la position du rotor par rapport au stator. Le système décrit comprend un module électronique capable de corriger la position ainsi mesurée, sur la base de mesures initiales faites une fois pour toutes pour tenir compte des caractéristiques réelles de la machine électrique, afin de mieux la piloter en couple, notamment au démarrage. Il s'agit donc d'une correction permanente d'une mesure que l'on sait approximative, au moyen de l'électronique de commande du moteur et non pas d'un réglage initial par réglage mécanique du résolveur.

Dans une machine synchrone, par exemple triphasée, à aimant permanents, le couple produit dépend de l'interaction entre le flux rotorique et le flux statorique. Le flux rotorique étant produit par les aimants permanents, on règle le couple par le réglage du flux statorique pour lequel deux paramètres sont accessibles : l'amplitude du flux, réglée elle-même par l'amplitude des courants du système triphasé d'alimentation, et la phase du flux statorique par rapport au flux rotorique. Cette phase est elle-même réglée par la phase des courants statoriques. A amplitude courant donnée, le couple maximum est obtenu lorsque le flux rotorique est, à peu de chose près, en quadrature de phase par rapport au flux statorique. L'amplitude des courants est asservie grâce à des régulateurs qui utilisent les mesures de capteurs de courant.

Pour pouvoir régler exactement la phase des courants, il est nécessaire de connaître la position du rotor moteur (donc du flux rotorique) par rapport au bobinage statorique. C'est la fonction du résolveur qui est un capteur permettant de mesurer la position absolue du rotor de résolveur sur un tour électrique. Un résolveur est lui-même constitué d'un stator et un rotor. L'indication de la mesure dépend de la position relative entre stator résolveur et rotor résolveur. A position de référence donnée entre rotor machine et stator machine correspond une valeur de référence, par exemple zéro, pour la mesure de la position rotorique. Le résolveur ayant pu être installé de manière angulaire quelconque sur la machine, il existe une différence entre l'indication de la mesure résolveur et la valeur de référence de la position rotorique. Appelons cette différence « erreur de calage résolveur ». Il est nécessaire de connaître cette erreur de calage résolveur pour connaître exactement la position du flux rotorique machine et donc pouvoir optimiser le pilotage de la machine. Lorsque cette erreur de calage résolveur est connue, il existe deux solutions pour s'en affranchir : soit une compensation logicielle, soit un réglage mécanique de la position relative entre rotor de résolveur et stator résolveur de manière à ce que l'indication de la mesure soit effectivement zéro. Appelons cette opération respectivement le calage logiciel du résolveur et le calage mécanique du résolveur de la machine électrique.

Pour le pilotage de la machine électrique et par convention, la référence angulaire « zéro degré » de la position absolue du rotor de la machine sur un tour électrique intervient lorsque les pôles rotoriques de la machine (sachant qu'il peut y avoir une ou plusieurs paires de pôles au rotor, par exemple très souvent trois paires de pôles dans des machines à hautes performances, ce qui définit alors trois tours électriques pour un tour mécanique) sont alignés sur les axes respectifs du bobinage de la phase A, c'est-à-dire l'une des phases du stator, dont on connaît bien évidemment la position spatiale par la construction des bobinages. Pour cette position relative particulière entre le rotor de la machine électrique et le stator de la machine électrique, il est donc nécessaire de régler mécaniquement la position relative entre rotor de résolveur et stator résolveur de manière à ce que l'indication de la mesure soit effectivement zéro. Appelons cette opération le calage du résolveur de la machine électrique.

Cette opération de calage présente l'avantage que l'on peut alors, dans un objet industriel utilisant une telle machine électrique et fabriqué en série comme une automobile (par exemple la machine électrique est un moteur dans une chaîne de traction électrique), changer la machine électrique sans devoir procéder à des ajustements de paramètres dans le logiciel de pilotage, au bénéfice de la facilité de la maintenance de ces véhicules.

L'objectif de l'invention est de proposer les moyens permettant de procéder à ce calage du résolveur de façon automatique.

### EXPOSE DE L'INVENTION

L'action de calage du résolveur nécessite deux actions : il faut pouvoir mesurer l'erreur de calage du résolveur et il faut pouvoir mécaniquement régler la position relative entre stator et rotor résolveur pour ramener cette erreur de calage résolveur à zéro.

Selon un premier aspect de l'invention, en supposant connue l'erreur de calage résolveur, c'est à dire l'écart d'azimut du rotor de résolveur, la correction de l'erreur de position se fait en bloquant la position relative du rotor résolveur par rapport au stator du résolveur de sorte que rotor et stator ne puissent pas bouger l'un par rapport à l'autre, et en donnant un train d'impulsions avec la machine électrique elle-même pour faire tourner le rotor résolveur sur l'arbre de la machine électrique.

Dès lors, l'invention propose en rapport avec la revendication 1 un procédé de réglage d'un résolveur d'une machine électrique, la machine électrique comportant un stator principal et un rotor principal, le rotor principal étant agencé sur un arbre monté tournant par rapport au stator principal, le résolveur de ladite machine comprenant un stator de résolveur et un rotor de résolveur, le stator de résolveur étant monté sur un support solidaire du stator principal et le rotor de résolveur étant monté sur un support solidaire dudit arbre, le stator de résolveur et le rotor de résolveur étant montés en regard l'un de l'autre et proche d'une extrémité axiale de ladite machine, le rotor de résolveur étant l'élément réglable du résolveur et étant monté par friction sur son support de sorte que sa position angulaire relative par rapport à son support puisse être modifiée pour réglage initial en exerçant un couple entre ledit rotor de résolveur et son support, le procédé comportant les étapes suivantes :
(i) bloquer la position relative du rotor de résolveur par rapport au stator de résolveur,
(ii) alimenter le stator principal pour que la machine électrique développe un couple de correction permettant de faire tourner le rotor de résolveur par rapport à l'arbre de la machine d'un angle de correction prédéterminé, le procédé utilisant un variateur de courant pour alimenter le stator principal, ledit variateur recevant la mesure d'angle αₘ délivrée par le résolveur et recevant des courants de consigne Id et Iq alimentant une unité de calcul effectuant une transformation de Park inverse pour appliquer aux bobinages statoriques du stator principal des consignes de courant et de tension appropriées, ledit variateur comportant un régulateur de tension, de préférence de type PI (proportionnel intégral), régulant une tension Ud obtenue par transformation de Park et délivrant un angle α_{c} de correction ajouté à la mesure d'angle αₘ délivrée par le résolveur pour obtenir l'angle résolveur αᵣ utilisé par le variateur, le procédé comportant les étapes suivantes :
   (i) appliquer au stator principal une consigne courant jusqu'à ce que la machine électrique atteigne une vitesse de rotation prédéterminée,
   (ii) appliquer au stator principal une consigne de courant nulle,
   (iii) réguler la tension Ud en faisant varier l'angle α_{c} de correction et enregistrer la valeur de l'angle α_{c} = α_{c0} lorsque la tension Ud est à zéro.

Ainsi l'invention permet de réaliser, de façon automatique, un réglage initial du résolveur en agissant sur le rotor de résolveur. Précisons que lorsque le présent mémoire parle d'un résolveur, il faut comprendre tout autre capteur permettant de mesurer une position angulaire absolue du rotor d'une machine électrique.

### BREVE DESCRIPTION DES FIGURES

D'autres caractéristiques et avantages de l'invention ressortent de la description faite ci-après en référence aux dessins annexés qui montrent, à titre d'exemple non limitatif, une réalisation de l'objet de l'invention :
la figure 1 est un schéma simplifié d'un variateur dans un banc d'étalonnage permettant la mise en oeuvre du procédé de mesure du décalage d'un résolveur d'une machine synchrone auto-pilotée, selon l'invention ;
la figure 2 est un schéma vectoriel simplifié se rapportant à une machine électrique en rotation à vide (courant nul) dont le résolveur comporte une erreur de calage du résolveur ;
la figure 3 est un schéma vectoriel simplifié se rapportant à la machine électrique de la figure 2, après correction de l'erreur de calage du résolveur ;
la figure 4 représente de façon schématique un banc de réglage pour la mise en oeuvre du procédé de réglage d'un résolveur d'une machine électrique selon l'invention ;
la figure 5 est un schéma fonctionnel décrivant le procédé de réglage d'un résolveur d'une machine électrique selon l'invention.

### DESCRIPTION D'UN EXEMPLE DE REALISATION

Exposons tout d'abord comment on peut procéder à la mesure de l'erreur de calage du rotor du résolveur.

Selon une démarche classique, on injecte un courant constant par exemple dans deux phases du bobinage statorique. Le rotor, qui doit être libre en rotation, prend alors une position d'équilibre bien définie, le flux rotorique s'alignant naturellement avec le flux statorique produit. Pour cette position d'équilibre du rotor, on sait quelle devrait être l'indication de la mesure de position par le résolveur et on peut donc en déduire l'erreur entre cette mesure visée et la mesure courante. C'est cette erreur qu'il faudra annuler par l'opération de calage résolveur.

Cette méthode présente cependant les inconvénients suivants. Il est nécessaire d'injecter des courants importants dans le stator pour obtenir une position rotorique réellement bien définie, d'où un échauffement potentiellement important au cours de la procédure de calage. Pour une machine multipolaire à p paires de pôles, il y a p tours électriques par tour mécanique, il y a donc autant de positions d'équilibre que de paires de pôles. Dans la pratique, il peut apparaître une dispersion entre ces différentes positions due par exemple à la dispersion de fabrication ou aux tolérances mécaniques. Pour optimiser le calage d'un résolveur, il serait donc nécessaire de refaire une mesure de l'erreur, suivant la méthode exposée ci-avant, pour chacune des positions d'équilibre correspondant à chacun des tours électriques. Cette démarche est très longue.

La technique proposée par l'invention et exposée ci-dessous exploite une méthode mathématique bien connu de l'homme du métier, à savoir la transformée dite « de Park », directe (pour passer d'un repère triphasé (A ; B ; C) lié au stator à un repère tournant biphasé (d ; q) en connaissant également la position angulaire Θ = ωt + α0 du rotor machine par rapport au stator, ou la transformée de Park inverse pour passer du repère de Park (d ; q) au repère triphasé (A ; B ; C). L'utilisation de telles transformées est classique dans le métier et des variateurs de courant pour réguler le courant (donc le couple) de machines électriques synchrones auto-pilotées construits sur cette base sont disponibles dans l'état de la technique.

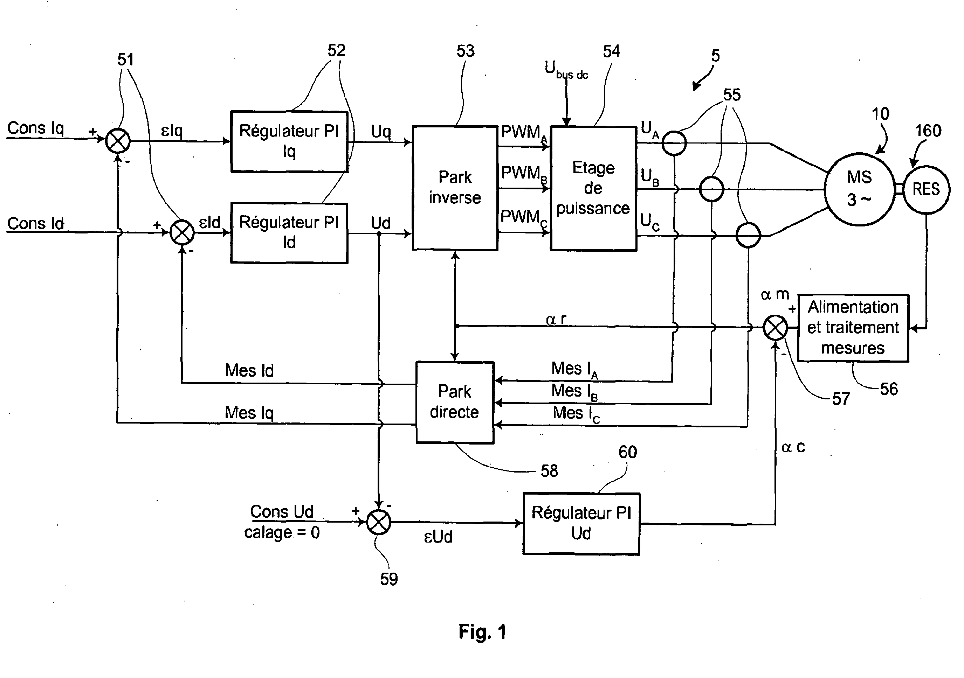

A la figure 1, on voit un schéma simplifié d'une installation de mesure de l'erreur de calage d'un résolveur 160 d'une machine électrique 10. On voit que l'installation de mesure comporte un variateur de courant 5 pour alimenter le stator principal. Le variateur est conçu pour exploiter les transformations de Park bien connues de l'homme du métier. On voit que le variateur reçoit des consignes de courant ConsIq et ConsId ; il comporte des sommateurs 51 recevant en entrée non inverseuse lesdites consignes de courant ConsIq et ConsId et en entrée inverseuse des valeurs dites MesId et MesIq dont on verra ci-dessous comment elles sont obtenues. En sortie des sommateurs 51, le variateur comporte des lignes sur lesquelles circulent les écarts entre lesdites consignes de courant ConsIq et ConsId et les valeurs dites MesId et MesIq, à savoir les valeurs dites εId et εIq. Ces lignes aboutissent à l'entrée de régulateurs de courant PI (proportionnel intégral) 52 délivrant des tensions, respectivement les tensions Uq et Ud. Remarquons que les moyens d'action des régulateurs de courant PI 52 sont les tensions Uq et Ud mais ce sont en fait des régulateurs de courant qui ont pour effet de respecter lesdites consignes de courant ConsIq et ConsId.

On voit ensuite une première unité de calcul 53 comportant les éléments et les programmes permettant d'effectuer une transformée de Park inverse sur la base des tensions Uq et Ud reçues des régulateurs de courant PI 52, et sur la base de la mesure de l'angle rotor αᵣ obtenue comme indiquée ci-dessous. Sur ces bases, comme bien connu en soi par l'homme du métier, la première unité de calcul 53 est à même de délivrer des signaux de consigne de tension électrique, respectivement PWM_{A}, PWM_{B} et PWM_{C}, pour pouvoir générer un système de tensions alternatives triphasé équilibré. Un étage de puissance 54 reçoit les consignes PWM_{A}, PWM_{B} et PWM_{C} issues de la première unité de calcul 53 ; il reçoit également une ligne de puissance sur laquelle l'énergie électrique est disponible sous forme de tension continue Ubus-d_{C}. Sur ces bases, l'étage de puissance 54 est à même de générer un système de tensions triphasé équilibré, respectivement U_{A}, U_{B} et U_{C}, pour alimenter chacune des phases A, B et C de la machine électrique 10. Des capteurs de courant 55 mesurent les courants de chacune des phases, délivrant respectivement les valeurs Mes I_{A}, Mes I_{B} et Mes I_{C}. Remarquons que, lorsque la machine électrique est équilibrée, il est possible de n'utiliser que deux mesures, par exemple les mesures des courants I_{A} et I_{B} et de calculer le courant I_{C} = -(I_{A}+ I_{B}).

Le variateur de courant 5 comporte aussi une unité de traitement de signaux 56 permettant de transformer les signaux électriques reçus du stator de résolveur 160 en mesure d'angle αₘ. On voit encore un sommateur 57 recevant en entrée non inverseuse la mesure d'angle αₘ délivrée par l'unité de traitement 55 et, en entrée inverseuse, un angle α_{c} de mesure de l'erreur de calage obtenue comme expliqué ci-dessous. Dans le sommateur 57 l'angle α_{c} est retranché de la mesure d'angle αₘ délivrée par le résolveur pour obtenir l'angle rotor αᵣ utilisé par le variateur.

Enfin, le variateur de courant 5 comporte une seconde unité de calcul 58 comportant les éléments et les programmes permettant d'effectuer une transformée de Park directe. A partir des courants mesurés sur chacune des phases, respectivement les mesures Mes I_{A}, Mes I_{B} et Mes I_{C} et de l'angle rotor αᵣ, comme connu en soi par l'homme du métier, la seconde unité de calcul 57 délivre lesdites valeurs MesId et MesIq.

Selon une caractéristique remarquable de l'invention, le variateur de courant 5 comporte encore un régulateur de tension PI 60, de type PI (proportionnel intégral), délivrant un angle α_{c} destiné à corriger l'erreur de calage en régulant une valeur de consigne pour la tension Ud. La tension Ud est amenée à l'entrée inverseuse d'un sommateur 59, qui reçoit en entrée non inverseuse une consigne ConsUd. En sortie du sommateur 59, l'écart de tension εUd alimente le régulateur PI de tension 60.

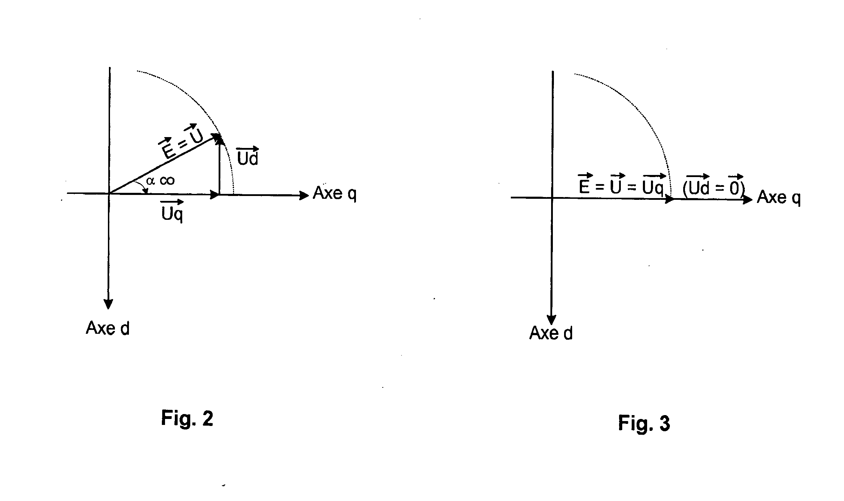

Le fonctionnement de l'installation est le suivant. Observons d'abord la figure 2. Celle-ci est un schéma vectoriel, résultant d'une transformation de Clark directe, d'une machine électrique fonctionnant à vide (courant nul) et dont le résolveur comporte une erreur de calage d'angle α_{c0}. La machine tourne à une vitesse telle qu'elle génère une force électromotrice E̅. Dès lors, pour asservir un courant nul, le variateur de courant 5, dans lequel le régulateur PI de tension 60 serait désactivé, génère une tension U̅ exactement identique en phase et amplitude à la force électromotrice E̅. Cette tension U̅ se décompose en tensions U̅d̅ et U̅q̅ sur les deux axes respectifs d et q du repère de Park. S'il existe une erreur de calage, soit αco différent de zéro, la composante U̅d̅ est présente. S'il n'y a pas d'erreur de calage, soit αc0 nul, la composante U̅d̅ est nulle, la composante U̅q̅ est égale à la tension U̅ elle-même égale à la force électromotrice E̅, toutes ces tensions étant en phase avec l'axe q du repère de Park : c'est le cas de la figure 3.

On procède en pratique de la façon suivante. On lance le rotor principal de la machine électrique, qui est libre mécaniquement, en rotation en injectant des courants appropriés grâce au variateur (décrit ci-dessus et illustré à la figure 1) et ce jusqu'à atteindre une certaine vitesse de rotation. Pour que la procédure soit précise, cette vitesse doit être suffisamment importante pour que les dispersions de détermination des tensions Ud et Uq par les régulateurs de courant PI 52 soient suffisamment faibles devant l'amplitude de la force électromotrice E créée par la rotation. Lorsque la vitesse de rotation voulue est atteinte, les consignes de courant - ConsIq et ConsId - sont fixées à 0. Il s'en suit une décélération du rotor de la machine électrique, « en roue libre ». Dans cette phase de décélération, la sortie des régulateurs de courant PI 52 (sur le dessin, les régulateurs de courant PI 52 pour le courant Iq et respectivement pour le courant Id) qui sont respectivement les tensions Uq et Ud vont prendre la valeur nécessaire pour compenser exactement la force électromotrice de la machine électrique et ainsi effectivement annuler le courant dans la machine électrique. Comme dit précédemment, dans cette situation, pour une erreur de calage nulle, la composante Ud devrait être nulle.

L'installation permet, grâce au régulateur PI de tension 60, d'effectuer une correction logicielle de l'angle donné par la mesure résolveur pour permettre au variateur de fonctionner avec la bonne référence de mesure de position rotorique. Dans ces conditions où le variateur fonctionnerait avec la bonne référence de mesure de position rotorique, on aurait une tension Ud nulle. Dès lors, si on impose cette consigne ConsUd=0 à l'entrée du sommateur 59, celui-ci envoie au régulateur PI de tension 60 un écart de tension εUd qui représente l'opposé de la tension Ud . Pendant la phase de décélération, d'une façon itérative (mais quasi continue puisque la période d'itération est de l'ordre de 10 ms), le régulateur PI de tension 60 va faire varier l'angle α_{c} pour réduire l'écart de tension εUd. Lorsque l'écart de tension εUd est nul, on obtient l'angle α_{c} = α_{c0}, valeur qui est alors mémorisée et qui représente l'erreur de calage à corriger mécaniquement ultérieurement (ou bien entendu toujours par correction logicielle en stockant par exemple cette valeur de correction en mémoire non volatile). Dans cet état, c'est-à-dire après la correction logicielle de l'erreur de calage du résolveur par le régulateur PI de tension 60, le fonctionnement de la machine électrique est représenté par la figure 3. Le vecteur tension U est aligné avec l'axe q et vaut Uq, la tension Ud étant nulle.

De préférence, il faut avoir obtenu une mesure de l'erreur de calage bien avant que la vitesse du rotor ne s'annule, et ceci pour avoir une force électromotrice suffisante. En pratique, la régulation de la tension Ud est pilotée de façon à atteindre zéro alors que la vitesse de rotation du rotor principal de la machine est encore supérieure à un seuil prédéterminé. Il en va de la précision de la mesure car la tension sur l'axe d, pour une erreur de calage, sera d'autant plus grande qu'il y a de force électromotrice aux bornes de la machine électrique.

Suivant une caractéristique remarquable de l'invention, le procédé de mesure de l'erreur de calage d'un résolveur d'une machine électrique se termine donc en régulant la tension Ud en faisant varier l'angle α_{c} de correction, puis l'angle α_{c} = α_{c0}, est mémorisé lorsque la tension Ud est à zéro pour pouvoir procéder aux opération de correction de la position du rotor de résolveur sur l'arbre de la machine électrique car, d'un étalonnage logiciel, on veut passer à une correction mécanique de la machine électrique.

De préférence, dans le procédé de mesure de l'erreur de calage d'une résolveur d'une machine électrique, on répète les étapes consistant à (i) appliquer au stator principal une consigne courant jusqu'à ce que la machine électrique atteigne une vitesse de rotation prédéterminée, (ii) appliquer au stator principal une consigne de courant nulle, et (iii) réguler la tension Ud en faisant varier l'angle α_{c} de correction et enregistrer la valeur de l'angle α_{c} = α_{c0} lorsque la tension Ud est à zéro. et l'on calcule la moyenne des valeurs α_{c0} obtenues. En outre et également de préférence, on répète les étapes (i), (ii) et (iii) citées ci-dessus en faisant tourner la machine électrique dans l'autre sens et l'on calcule la moyenne des valeurs α_{c0} obtenues.

De préférence, il faut faire précéder les étapes (i), (ii) et (iii) citées au paragraphe précédent d'une première estimation grossière de l'erreur de calage obtenue par exemple en injectant des courants constants dans deux phases du stator principal pour obtenir une position d'équilibre du rotor de résolveur et comparer cette position d'équilibre à la position d'alignement théorique pour cette injection de courant. On pourrait bien entendu également injecter un courant dans les 3 phases, le courant de l'une des trois phase ayant une valeur +I et les courants des deux autres phases ayant la valeur -I/2.

Précisons que l'on utilise le même variateur de courant 5 décrit ci-dessus et illustré à la figure 1 pour envoyer un courant dans deux phases du stator afin de procéder à un premier réglage grossier comme il va être expliqué ci-dessous. Variateur de courant 5 en mode première correction, machine électrique à l'arrêt, le variateur de courant 5 injecte d'abord un faible courant dans deux phases du stator. Dans cette étape, le rotor s'aligne (par le fonctionnement électromagnétique) mais la machine électrique ne démarre pas ; sa vitesse reste nulle, il y a rotation au maximum d' 1/2 tour électrique, pour acquérir la position d'équilibre électromagnétique. Pour ce faire, sans utiliser les régulateurs de courant PI 52, on génère à l'entrée de l'étage de puissance 54 des consignes de tension fixes et opposées pour 2 phases alors que la 3^{ème} consigne de tension est maintenue à zéro (PWMA = -PWMB et PWMC = 0). Ceci aboutit à la génération d'un courant constant dans les 2 phases A et B de la machine 10, ce courant dépendant de la consigne appliquée, de la valeur de la tension de bus de et de l'impédance du bobinage de la machine.

C'est la position α1 (l'une de ses p (p est le nombre de paires de pôles) positions d'équilibre possibles). Pour cette position d'équilibre rotor connue, la mesure position provenant du résolveur (via traitement numérique) devrait indiquer un angle physique α2 correspondant à cette position avec deux phases alimentées. La différence α0=α2-α1 est le décalage initial du résolveur, compensé de manière logicielle. Cette méthode est assez traditionnelle et il n'est pas nécessaire de l'expliquer en détail. Ici, elle n'est utilisée que de préférence et seulement pour obtenir une première correction grossière, approximative. Indiquons simplement, en se reportant à la figure 2, que cette méthode permet de ramener le vecteur U dans une position pas trop éloignée de l'axe q. Notons que cette méthode ne traite qu'un pôle alors qu'il peut y avoir des dispersions de constructions entre pôles, qu'elle est donc très approximative tant que l'on n'a pas traité tous les pôles, mais que l'on ne l'utilise ici que pour une premier calage grossier, à environ 10% près.

Ce calage grossier nous permet d'appliquer des consignes de courant, respectivement ConsIq et ConsId, capables de fournir un couple suffisant pour lancer le moteur à une vitesse suffisante et dans le bon sens de rotation, préalable indispensable pour appliquer la méthode de mesure de l'angle α_{c0,} plus précise et plus directe, qui a été expliquée auparavant.

Passons maintenant à la description de la correction de l'erreur de calage. La façon de corriger exposée ci-dessous est indépendante de la façon dont on a obtenu la mesure de l'erreur de calage, c'est-à-dire comme exposé ci-dessus ou de toute autre manière.

Précisons encore que l'on va utiliser le même variateur de courant 5 décrit ci-dessus et illustré à la figure 1 pour envoyer le train d'impulsions de correction, après l'avoir éventuellement utilisé pour un premier réglage grossier comme expliqué ci-dessus. Variateur de courant 5 en mode correction finale, le procédé comportant les étapes suivantes :
(i) bloquer le rotor de résolveur par rapport au stator de résolveur,
(ii) alimenter le stator principal pour que la machine électrique développe un couple de correction permettant de faire tourner le rotor de résolveur par rapport à l'arbre de la machine d'un angle de correction.

En outre, pour exercer le couple de correction, il est proposé de procéder selon les étapes suivantes :
(a) acquérir une mesure de l'erreur d'angle de position du rotor de résolveur par rapport au stator de résolveur,
(b) calculer un train d'impulsions de couple de correction sur la base de l'erreur de position,
(c) exercer le train d'impulsions de couple de correction,
(d) acquérir une nouvelle mesure de l'erreur d'angle de position du rotor de résolveur par rapport au stator de résolveur,
(e) répéter les étapes (b) à (d) précédentes jusqu'à ce que l'erreur de position soit inférieure à une tolérance préétablie.

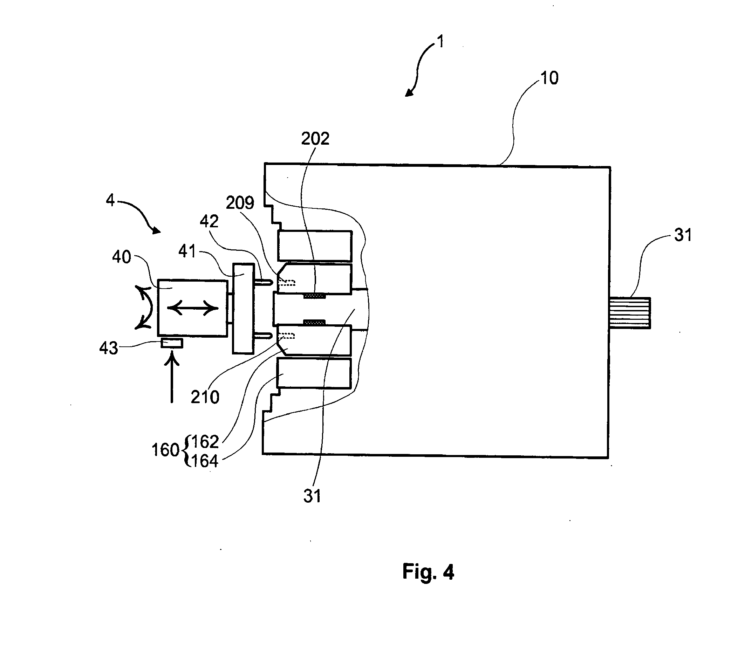

On voit à la figure 4 un banc 1 de correction de l'erreur de calage d'un résolveur d'une machine électrique. Chaque impulsion du train d'impulsions de l'étape (c) ci-dessus aboutit à faire tourner le rotor de résolveur d'un angle prédéterminé. Les impulsions et l'angle prédéterminé peuvent être déterminés de façon expérimentale. A chaque impulsion, la machine électrique développe un couple de rotation moteur mais, comme le rotor de résolveur est bloqué mécaniquement par rapport au stator de résolveur, et comme l'amplitude du couple de rotation dépasse le couple dû à la friction du rotor de résolveur 162 sur son support, c'est-à-dire sur la portée de l'arbre 31 destinée à recevoir ledit rotor de résolveur 162, on provoque un glissement, c'est-à-dire une rotation forcée du rotor de résolveur 162 par rapport à l'arbre 31. C'est ainsi que l'on effectue progressivement le réglage du rotor de résolveur 162. Le nombre d'impulsions est calculé en divisant l'erreur d'angle de position par ledit angle prédéterminé. De préférence, ledit angle prédéterminé est réduit à chaque itération du procédé de réglage.

On voit à la figure 4 que le banc 1 reçoit et immobilise (par des moyens non représentés) la machine électrique synchrone 10 à corriger. Cette machine comprend un stator principal (non représenté) et un rotor principal (non représenté) tournant par rapport au stator principal et monté sur un arbre 31 dont on voit une extrémité cannelée destinée à être accouplée avec un mécanisme entraîné par ou entraînant la machine électrique. Cette machine comporte un stator de résolveur 164 et un rotor de résolveur 162. L'extrémité de l'arbre 31 opposée à l'extrémité cannelée comporte un épaulement contre lequel vient s'appliquer le rotor de résolveur 162. Entre l'arbre 31 et le rotor de résolveur 162 est logée une bague de friction 202 qui, tout en admettant un glissement relatif en rotation si le couple appliqué est suffisamment élevé, immobilise le rotor de résolveur 162 sur l'arbre 31 aux sollicitations de service, c'est en dire en fonctionnement normal. C'est un moyen technologique parmi d'autres permettant d'immobiliser un rotor de résolveur sur l'arbre de la machine électrique aux sollicitations de service tout en conservant une faculté de réglage de l'azimut du rotor de résolveur. La face terminale du rotor de résolveur est munie de deux trous borgnes 209 et 210. Là encore, il s'agit d'un moyen technologique parmi d'autres permettant de bloquer un rotor de résolveur par rapport au stator principal de la machine électrique afin de faire tourner l'arbre 31 de ladite machine électrique sans faire tourner le rotor de résolveur 162. Pour plus de détails sur ces dispositions constructives, le lecteur est invité à se reporter à la demande de brevet WO 2010/026159.

Le banc 1 de correction de l'erreur de calage comporte aussi un organe de blocage 4 qui comporte une tête 41 comportant deux picots 42 conformés et positionnés l'un par rapport à l'autre pour pouvoir s'insérer dans les trous borgnes 209 et 210. Les picots 42 sont montés sur la tête 41 d'une façon élastique, leur permettant de s'enfoncer quelque peu dans celle-ci si l'on appuie sur leur extrémité par un mouvement parallèle à l'axe du rotor 31. La tête 41 est montée sur un actionneur 40 centré sur l'axe du rotor 41 et capable de mouvoir la tête 41 dans le sens de l'axe du rotor 31 pour rapprocher ou éloigner la tête 41 du rotor de résolveur 162, et capable de faire tourner autour de l'axe du rotor 31 la tête 41 de façon à ce que, en combinant un mouvement de rotation de la tête 41 et un mouvement de translation de celle-ci, les picots 42 puissent entrer en prise avec les trous borgnes 209 et 210. L'organe de blocage 4 comporte enfin un frein 43 permettant d'immobiliser l'actionneur 40 et donc la tête 41.

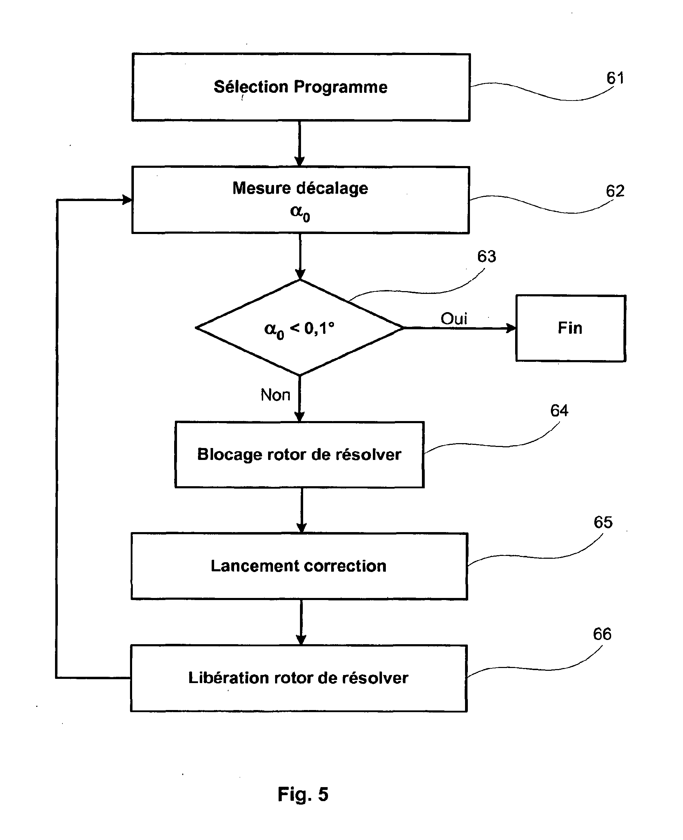

La figure 5 est un schéma fonctionnel décrivant le procédé de réglage d'un résolveur d'une machine électrique selon l'invention. Précisons d'abord qu'un banc 1 de correction de l'erreur de calage selon l'invention comporte de préférence un automate permettant d'automatiser les opérations. Un tel automate comporte en mémoire les paramètres permettant de traiter toute une gamme de machines électriques. Après avoir installé la machine électrique dont il faut régler le résolveur sur le banc 1 de correction de l'erreur de calage, l'opérateur sélectionne le type de machine installée sur le banc : on voit un premier bloc 61 de « sélection programme » sélectionnant un programme adapté à la machine électrique à régler. Ce programme permet d'enchaîner automatiquement les opérations décrites ci-dessous. On voit un bloc 62 de « mesure décalage α_{c0} » effectuant une mesure de préférence au moyen d'une installation de mesure comporte un variateur de courant 5 et un régulateur PI de tension 60 délivrant un angle α_{c0} de mesure de l'erreur de calage, comme exposé ci-dessus. On voit ensuite un bloc 63 de test vérifiant si α_{c0} (l'erreur de position du rotor de résolveur) est inférieur à une tolérance préétablie, ici valant 0,1°. Si c'est le cas, le réglage d'un résolveur est terminé (sortie vers le statut « fm »). Si ce n'est pas le cas, le programme enchaîne par le bloc 64 « blocage rotation du résolveur » : se reportant à la figue 4, cette action consiste à commander d'abord une approche rapide de la tête 41 vers le rotor de résolveur 162, puis une approche lente sur les derniers millimètres. Une fois en contact, on commande une rotation de la tête 41 jusqu'à ce que les picots 42, de par leur montage élastique sur la tête 41, s'insèrent spontanément dans les trous borgnes 209 et 210. Le rotor de résolveur 162 est alors solidaire de la tête 41, elle-même solidaire de l'actionneur. L'actionneur est ensuite immobilisé par le frein 43, ce qui immobilise la tête 41 et donc aussi le rotor de résolveur 162.

Ensuite, on voit le bloc 65 de « lancement correction » : cette opération consiste à alimenter le stator principale de la machine électrique pour effectuer des impulsions de couple, pendant un temps donné, en commandant de façon appropriée le variateur de la machine électrique, comme exposé ci-dessus. On enchaîne ensuite par le bloc 66 de « libération rotor de résolveur » qui consiste à relâcher le frein 43 et faire reculer la tête 41. On procède ensuite à une nouvelle mesure, par retour au bloc 62 de « mesure décalage α_{c0} », jusqu'à ce que le rotor de résolveur soit calé dans la tolérance convenue.

Une fois que le calage angulaire du rotor de résolveur est effectué, on peut procédé au montage final de la machine électrique en général en montant un capot de protection tel que ce qui est décrit par exemple dans le brevet WO 2010/026159 précité.

## Revendications

1. Procédé de réglage d'un résolveur d'une machine électrique, la machine électrique comportant un stator principal et un rotor principal, le rotor principal étant agencé sur un arbre (31) monté tournant par rapport au stator principal, le résolveur (160) de ladite machine comprenant un stator de résolveur et un rotor de résolveur, le stator de résolveur (164) étant monté sur un support solidaire du stator principal et le rotor de résolveur (162) étant monté sur un support solidaire dudit arbre, le stator de résolveur et le rotor de résolveur étant montés en regard l'un de l'autre et proche d'une extrémité axiale de ladite machine, le rotor de résolveur étant l'élément réglable du résolveur et étant monté par friction sur son support de sorte que sa position angulaire relative par rapport à son support puisse être modifiée pour réglage initial en exerçant un couple entre ledit rotor de résolveur et son support, le procédé comportant les étapes suivantes :
(i) bloquer la position relative du rotor de résolveur par rapport au stator de résolveur,
(ii) alimenter le stator principal pour que la machine électrique développe un couple de correction permettant de faire tourner le rotor de résolveur par rapport à l'arbre de la machine d'un angle de correction α_{c}
le procédé utilisant un variateur de courant pour alimenter le stator principal, ledit variateur recevant des courants de consigne Id et Iq alimentant une unité de calcul effectuant une transformation de Park inverse pour appliquer aux bobinages statoriques du stator principal des consignes de courant et de tension appropriées,
ledit variateur de courant comportant un régulateur permettant de contrôler un angle en régulant une tension Ud obtenue par transformation de Park, et
le procédé étant **caractérisé en ce que**, pour déterminer l'angle de correction, il comporte les étapes suivantes :
(a) appliquer au stator principal une consigne courant jusqu'à ce que la machine électrique atteigne une vitesse de rotation prédéterminée,
(b) appliquer au stator principal une consigne de courant nulle,
(c) réguler la tension Ud en faisant varier l'angle α_{c} de correction et enregistrer la valeur de l'angle α_{c} = α_{c0} lorsque la tension Ud est à zéro.

2. Procédé de réglage d'un résolveur d'une machine électrique selon la revendication 1 dans lequel, pour exercer le couple de correction, on effectue les étapes suivantes :
A. acquérir une mesure de l'erreur d'angle de position du rotor de résolveur par rapport au stator de résolveur,
B. calculer un train d'impulsions de couple de correction sur la base de l'erreur de position,
C. exercer le train d'impulsions de couple de correction,
D. acquérir une nouvelle mesure de l'erreur d'angle de position du rotor de résolveur par rapport au stator de résolveur,
E. répéter les étapes (b) à (d) précédentes jusqu'à ce que l'erreur de position soit inférieure à une tolérance préétablie.

3. Procédé de réglage d'un résolveur d'une machine électrique selon la revendication 2, dans lequel chaque impulsion aboutit à faire tourner le rotor de résolveur d'un angle prédéterminé, en exerçant un couple de rotation dont l'amplitude dépasse le couple dû à la friction de l'élément réglable sur son support, le nombre d'impulsions étant calculé en divisant l'erreur d'angle de position par ledit angle prédéterminé.

4. Procédé de réglage d'un résolveur d'une machine électrique selon la revendication 3, dans lequel ledit angle prédéterminé est réduit à chaque itération.

5. Procédé de réglage d'un résolveur d'une machine électrique selon l'une des revendications 1 à 4 dans lequel la régulation de la tension Ud est pilotée de façon à atteindre zéro alors que la vitesse de rotation du rotor principal de la machine est encore supérieure à un seuil prédéterminé.

6. Procédé de réglage d'un résolveur d'une machine électrique selon l'une des revendications 1 à 5 dans lequel on répète les étapes (a), (b) et (c) et l'on calcule la moyenne des valeurs α_{c0} obtenues.

7. Procédé de réglage d'un résolveur d'une machine électrique selon l'une des revendications 1 à 5 dans lequel on répète les étapes (a), (b) et (c) en faisant tourner la machine électrique dans l'autre sens et l'on calcule la moyenne des valeurs α_{c0} obtenues.

8. Procédé de réglage d'un résolveur d'une machine électrique selon l'une des revendications 1 à 5 dans lequel les étapes (a), (b) et (c) sont précédées d'une première estimation grossière de l'erreur de calage obtenue en injectant des courants dans deux phases du stator principal pour obtenir une position d'équilibre du rotor de résolveur et comparer cette position d'équilibre à la position d'alignement théorique pour cette injection de courant.

9. Procédé de réglage d'un résolveur d'une machine électrique selon l'une des revendications 1 à 5, dans lequel le régulateur de tension est de type PI (proportionnel intégral).

## Patentansprüche

1. Verfahren zur Einstellung eines Resolvers einer elektrischen Maschine, wobei die elektrische Maschine einen Hauptstator und einen Hauptrotor aufweist, wobei der Hauptrotor auf einer Welle (31) angeordnet ist, die bezüglich des Hauptstators drehend montiert ist, wobei der Resolver (160) der Maschine einen Resolverstator und einen Resolverrotor enthält, wobei der Resolverstator (164) auf einen fest mit dem Hauptstator verbundenen Träger montiert ist, und der Resolverrotor (162) auf einen fest mit der Welle verbundenen Träger montiert ist, wobei der Resolverstator und der Resolverrotor einander gegenüber und in der Nähe eines axialen Endes der Maschine montiert sind, wobei der Resolverrotor das einstellbare Element des Resolvers und mit Reibschluss auf seinen Träger montiert ist, so dass seine relative Winkelposition bezüglich seines Trägers für die Anfangseinstellung verändert werden kann, indem ein Drehmoment zwischen dem Resolverrotor und seinem Träger ausgeübt wird, wobei das Verfahren die folgenden Schritte aufweist:
(i) Blockieren der relativen Position des Resolverrotors bezüglich des Resolverstators,
(ii) Speisen des Hauptstators, damit die elektrische Maschine ein Korrekturmoment entwickelt, das es ermöglicht, den Resolverrotor bezüglich der Welle der Maschine um einen Korrekturwinkel α_{c} zu drehen,
wobei das Verfahren einen Stromrichter verwendet, um den Hauptstator zu speisen, wobei der Stromrichter Sollströme Id und Iq empfängt, die eine Recheneinheit speisen, welche eine inverse Park-Transformation ausführt, um an die Statorwicklungen des Hauptstators geeignete Strom-und Spannungssollwerte anzulegen,
wobei der Stromrichter einen Regler aufweist, der es ermöglicht, einen Winkel zu steuern, indem er eine Spannung Ud regelt, die durch eine Park-Transformation erhalten wurde, und
das Verfahren **dadurch gekennzeichnet ist, dass** es zur Bestimmung des Korrekturwinkels die folgenden Schritte aufweist:
(a)Anlegen eines Stromsollwerts an den Hauptstator, bis die elektrische Maschine eine vorbestimmte Drehgeschwindigkeit erreicht,
(b) Anlegen eines Stromsollwerts Null an den Hauptstator,
(c) Regeln der Spannung Ud durch Variieren des Korrekturwinkels α_{c} und Speichern des Werts des Winkels α_{c} - α_{c0}, wenn die Spannung Ud auf Null ist.

2. Verfahren zur Einstellung eines Resolvers einer elektrischen Maschine nach Anspruch 1, wobei zur Ausübung des Korrekturmoments die folgenden Schritte ausgeführt werden:
A. Erfassen eines Messwerts des Positionswinkelfehlers des Resolverrotors bezüglich des Resolverstators,
B. Berechnen einer Korrekturmoment-Impulsfolge auf der Basis des Positionsfehlers,
C. Ausüben der Korrekturmoment-Impulsfolge,
D. Erfassen eines neuen Messwerts des Positionswinkelfehlers des Resolverrotors bezüglich des Resolverstators,
E. Wiederholen der vorhergehenden Schritte (b) bis (d), bis der Positionsfehler unter einer vorab erstellten Toleranz liegt.

3. Verfahren zur Einstellung eines Resolvers einer elektrischen Maschine nach Anspruch 2, wobei jeder Impuls dazu führt, den Resolverrotor um einen vorbestimmten Winkel zu drehen, indem ein Drehmoment ausgeübt wird, dessen Amplitude das Drehmoment aufgrund der Reibung des einstellbaren Elements auf seinem Träger überschreitet, wobei die Anzahl von Impulsen berechnet wird, indem der Positionswinkelfehler durch den vorbestimmten Winkel dividiert wird.

4. Verfahren zur Einstellung eines Resolvers einer elektrischen Maschine nach Anspruch 3, wobei der vorbestimmte Winkel bei jeder Iteration reduziert wird.

5. Verfahren zur Einstellung eines Resolvers einer elektrischen Maschine nach einem der Ansprüche 1 bis 4, wobei die Regelung der Spannung Ud so gesteuert wird, dass Null erreicht wird, während die Drehgeschwindigkeit des Hauptrotors der Maschine noch höher als eine vorbestimmte Schwelle ist.

6. Verfahren zur Einstellung eines Resolvers einer elektrischen Maschine nach einem der Ansprüche 1 bis 5, wobei die Schritte (a), (b) und (c) wiederholt und der Mittelwert der erhaltenen Werte α_{c0} berechnet wird.

7. Verfahren zur Einstellung eines Resolvers einer elektrischen Maschine nach einem der Ansprüche 1 bis 5, wobei die Schritte (a), (b) und (c) wiederholt werden, indem die elektrische Maschine in der anderen Richtung gedreht und der Mittelwert der erhaltenen Werte α_{c0} berechnet wird.

8. Verfahren zur Einstellung eines Resolvers einer elektrischen Maschine nach einem der Ansprüche 1 bis 5, wobei vor den Schritten (a), (b) und (c) eine erste grobe Schätzung des erhaltenen Einstellfehlers liegt, die durch Einspeisung von Strömen in zwei Phasen des Hauptstator erhalten wird, um eine Gleichgewichtsposition des Resolverrotors zu erhalten, und diese Gleichgewichtsposition mit der theoretischen Ausrichtungsposition für diese Stromeinspeisung zu vergleichen.

9. Verfahren zur Einstellung eines Resolvers einer elektrischen Maschine nach einem der Ansprüche 1 bis 5, wobei der Spannungsregler von der Art PI (proportional integral) ist.

## Claims

1. Method for adjusting a resolver of an electric machine, the electric machine comprising a main stator and a main rotor, the main rotor being arranged on a shaft (31) mounted rotatably with respect to the main stator, the resolver (160) of the said machine comprising a resolver stator and a resolver rotor, the resolver stator (164) being mounted on a support attached to the main stator and the resolver rotor (162) being mounted on a support attached to the said shaft, the resolver stator and the resolver rotor being mounted facing one another and close to an axial end of the said machine, the resolver rotor being the adjustable element of the resolver and being mounted by friction on its support so that its relative angular position with respect to its support can be modified for initial adjustment by exerting a torque between the said resolver rotor and its support, the method comprising the following steps:
(i) locking the relative position of the resolver rotor with respect to the resolver stator,
(ii) energizing the main stator so that the electric machine develops a correction torque making it possible to rotate the resolver rotor with respect to the shaft of the machine by a correction angle α_{c},
the method using a current controller to energize the main stator, the said controller receiving setpoint currents Id and Iq feeding a calculation unit performing an inverse Park transformation so as to apply appropriate current and voltage setpoints to the stator coils of the main stator, the said current controller comprising a regulator making it possible to control an angle by regulating a voltage Ud obtained by Park transformation; and
the method being **characterized in that**, in order to determine the correction angle, it comprises the following steps:
(a) applying a current setpoint to the main stator until the electric machine attains a predetermined rotation speed,
(b) applying a zero current setpoint to the main stator,
(c) regulating the voltage Ud by varying the correction angle α_{c} and recording the value of the angle α_{c} = α_{c0} when the voltage Ud is at zero.

2. Method for adjusting a resolver of an electric machine according to Claim 1 in which, to exert the correction torque, the following steps are performed:
A. acquiring a measurement of the error in position angle of the resolver rotor with respect to the resolver stator,
B. calculating a train of correction torque pulses on the basis of the position error,
C. exerting the train of correction torque pulses,
D. acquiring a new measurement of the error in position angle of the resolver rotor with respect to the resolver stator,
E. repeating steps (b) to (d) above until the position error is less than a pre-established tolerance.

3. Method for adjusting a resolver of an electric machine according to Claim 2, in which each pulse culminates in rotating the resolver rotor by a predetermined angle, by exerting a rotation torque whose amplitude exceeds the torque due to the friction of the adjustable element on its support, the number of pulses being calculated by dividing the position angle error by the said predetermined angle.

4. Method for adjusting a resolver of an electric machine according to Claim 3, in which the said predetermined angle is reduced at each iteration.

5. Method for adjusting a resolver of an electric machine according to one of Claims 1 to 4 in which the regulation of the voltage Ud is controlled so as to attain zero while the rotation speed of the main rotor of the machine is still greater than a predetermined threshold.

6. Method for adjusting a resolver of an electric machine according to one of Claims 1 to 5 in which steps (a), (b) and (c) are repeated and the mean of the values α_{c0} obtained is calculated.

7. Method for adjusting a resolver of an electric machine according to one of Claims 1 to 5 in which steps (a), (b) and (c) are repeated by rotating the electric machine in the opposite direction and the mean of the values α_{c0} obtained is calculated.

8. Method for adjusting a resolver of an electric machine according to one of Claims 1 to 5 in which steps (a), (b) and (c) are preceded by a first coarse estimation of the setup error obtained by injecting currents into two phases of the main stator so as to obtain an equilibrium position of the resolver rotor and to compare this equilibrium position with the theoretical alignment position for this injection of current.

9. Method for adjusting a resolver of an electric machine according to one of Claims 1 to 5, in which the voltage regulator is of PI (proportional integral) type.
